# EUROPEAN PATENT APPLICATION

(11) **EP 4 317 022 A1**
(43) Date of publication of application: **07.02.2024**
(21) Application number: 22779836.0
(22) Date of filing: 07.03.2022
(51) Int. Cl.: B65G 1/00, B65G 1/10, B65G 1/137

(54) **INFORMATION PROCESSING DEVICE, INFORMATION PROCESSING METHOD, PROGRAM, AND SYSTEM**

(30) Priority: 31.03.2021 JP 2021060519
(71) Applicant: KABUSHIKI KAISHA TOSHIBA, Minato-ku Tokyo 105-0023 (JP); Toshiba Infrastructure Systems & Solutions Corporation, Kawasaki-shi, Kanagawa 212-0013 (JP)
(72) Inventor: MATSUMURA, Atsushi, Kawasaki-shi, Kanagawa 212-0013 (JP); TAKIGUCHI, Takeru, Kawasaki-shi, Kanagawa 212-0013 (JP); OTSURU, Yoshihide, Kawasaki-shi, Kanagawa 212-0013 (JP); TANAKA, Toshiyuki, Kawasaki-shi, Kanagawa 212-0013 (JP); SUWABE, Tomoyuki, Kawasaki-shi, Kanagawa 212-0013 (JP); KANEKIYO, Tatsushi, Kawasaki-shi, Kanagawa 212-0013 (JP); HIROSE, Kenichi, Kawasaki-shi, Kanagawa 212-0013 (JP)
(74) Representative: Horn Kleimann Waitzhofer Schmid-Dreyer Patent- und Rechtsanwälte PartG mbB
(86) International application number: PCT/JP2022/009767
(87) International publication number: WO 2022/209612

(57) **Abstract**

According to an embodiment, the information processing apparatus includes a communication interface and a processor. The processor acquires a plurality of orders from a host management apparatus through the communication interface; extracts, through the communication interface, a specific order from the plurality of orders based on label information indicating the specific order acquired from a first work station; and transmits, through the communication interface to an automated guided vehicle, a control signal for transporting one of racks that stores an article indicated by the extracted specific order to the first work station and a control signal for transporting another one of the racks that stores an article indicated by a normal order other than the specific order to one of the work stations other than the first work station.

## Description

### FIELD

Embodiments described herein relate generally to an information processing apparatus, an information processing method, program, and system.

### BACKGROUND

In recent years, a system is provided in which a rack that stores articles indicated by shipping orders is transported to a work station by using an automated guided vehicle. Such a system rearranges and allocates shipping orders to each work station for the purpose of reducing the number of rack calls or the like.

Some of the shipping orders may require a job such as attachment of a slip or a seal to an article or a box storing the article.

The conventional system has a problem in that sometimes it becomes unclear to which work station a shipping order requiring a job is to be allocated.

### Citation List

### Patent Literature

Patent Literature 1: Jpn. Pat. Appln. KOKAI Publication No. 2019-137543

### SUMMARY

### TECHNICAL PROBLEM

To solve the problem described above, an information processing apparatus, an information processing method, a program, and a system capable of allocating a predetermined order to a predetermined work station are provided.

### SOLUTION TO PROBLEM

According to an embodiment, the information processing apparatus includes a communication interface and a processor. The communication interface transmits and receives data to and from a host management apparatus configured to manage orders for picking up articles, a plurality of work stations configured to pick up articles, and an automated guided vehicle configured to transport racks that store articles. The processor acquires a plurality of orders from the host management apparatus through the communication interface; extracts, through the communication interface, a specific order from the plurality of orders based on label information indicating the specific order acquired from a first work station; and transmits, through the communication interface to the automated guided vehicle, a control signal for transporting one of the racks that stores an article indicated by the extracted specific order to the first work station and a control signal for transporting another one of the racks that stores an article indicated by a normal order other than the specific order to one of the work stations other than the first work station.

### BRIEF DESCRIPTION OF THE DRAWINGS

FIG. 1 is a diagram illustrating an application example of a physical distribution system according to an embodiment.
FIG. 2 is a block diagram illustrating an example of the physical distribution system according to the embodiment.
FIG. 3 is a block diagram illustrating an example of a host management apparatus according to the embodiment.
FIG. 4 is a block diagram illustrating an example of a control apparatus according to the embodiment.
FIG. 5 is a block diagram illustrating an example of an AGV according to the embodiment.
FIG. 6 is a diagram illustrating an example of a label correspondence table according to the embodiment.
FIG. 7 is a diagram illustrating a display example of an input/output apparatus according to the embodiment.
FIG. 8 is a diagram illustrating a display example of the input/output apparatus according to the embodiment.
FIG. 9 is a sequence diagram illustrating an operation example of the physical distribution system according to the embodiment.
FIG. 10 is a sequence diagram illustrating an operation example of the physical distribution system according to the embodiment.
FIG. 11 is a sequence diagram illustrating an operation example of the physical distribution system according to the embodiment.
FIG. 12 is a flowchart illustrating an operation example of the control apparatus according to the embodiment.
FIG. 13 is a flowchart illustrating an operation example of the control apparatus according to the embodiment.

### DETAILED DESCRIPTION

Hereinafter, an embodiment will be described with reference to the drawings.

A physical distribution system according to the embodiment picks up an article from a rack. The physical distribution system uses an automated guided vehicle (AGV) to transport a rack to a work station. The physical distribution system picks up articles from a rack at a work station. The physical distribution system causes a staff person or a robot to pick up an article from a rack. For example, the physical distribution system is used in a physical distribution center, a warehouse, or the like.

The physical distribution system acquires an order list composed of shipping orders. The physical distribution system picks up articles according to the shipping order. Some shipping orders include allocation of a job.

The job is a predetermined handling performed on the article after the article is picked up. For example, the job is attachment of a predetermined slip or seal to an article or a box storing the article. For example, the seal may be a fragile seal, a time-designated seal (such as a morning designated seal), a branch point receipt service seal, or the like. The predetermined slip is a cash-on-delivery slip or the like.

Further, the job may be wrapping of an article or a box storing the article.

The content of the job is not limited to a specific configuration.

Here, a shipping order to which a job is allocated is referred to as a job order. A shipping order to which no job is allocated is referred to as a normal order.

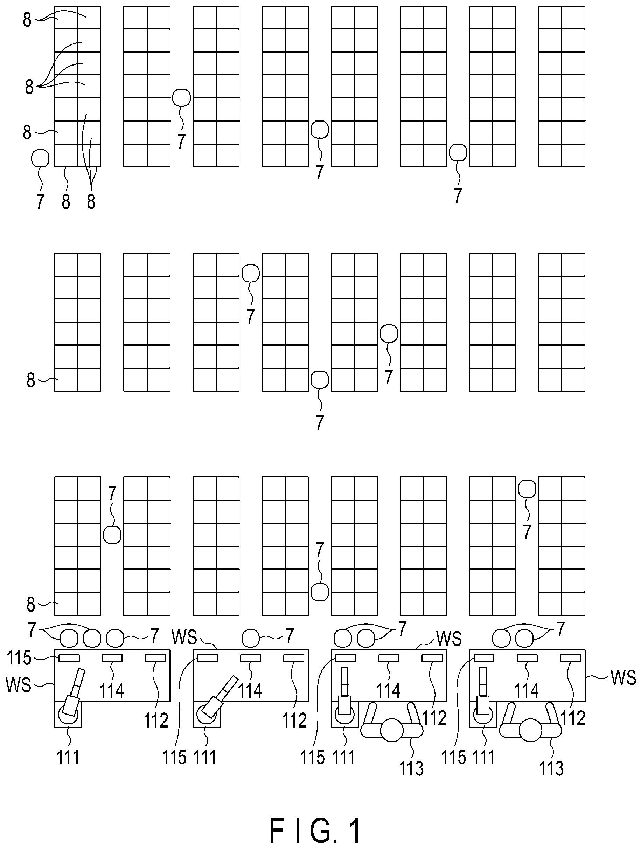

FIG. 1 is a diagram illustrating a configuration example of a physical distribution system 100 according to the embodiment.

As illustrated in FIG. 1, the physical distribution system 100 includes work stations WS, AGVs 7, AGV racks 8, and the like.

The work stations WS (first WS to fourth WS) each include a picking robot 111, an input/output apparatus 112, a staff person 113, a reader 114, a printer 115, and the like.

The picking robot 111 picks up an article from the AGV rack 8.

The physical distribution system 100 can operate the picking robot 111 to pick up an article at each work station WS. In addition, the physical distribution system 100 can stop the operation of the picking robot 111, allocate the staff person 113, and cause the staff person 113 to pick up an article.

The staff person 113 can handle the article while visually confirming an article handling schedule or the like displayed on the input/output apparatus 112.

The input/output apparatus 112 displays an image under the control of the control apparatus 4 described later. The input/output apparatus 112 accepts inputs of various operations from the staff person 113. The input/output apparatus 112 transmits a signal indicating the input operation to the control apparatus 4.

For example, the input/output apparatus 112 is constituted by a liquid crystal monitor and a touch panel.

The input/output apparatus 112 may be a wireless communication terminal allocated to the staff person 113.

Further, the input/output apparatus 112 may be installed in the work stations WS, and the picking robot 111 may be installed in some of the work stations. In this case, the work station WS in which the picking robot 111 is not installed is used as the work station WS for the staff person 113. The work station WS in which the picking robot 111 is installed can be used as either the work station WS for the picking robot 111 or the work station WS for the staff person 113.

The reader 114 reads a code. The code is obtained by encoding label information indicating the shipping order. The code may be a bar code, a two-dimensional code, or the like.

The label information includes a picking label for identifying a shipping order or a representative label corresponding to a plurality of picking labels. The reader 114 transmits the read code to the control apparatus 4.

For example, the reader 114 is constituted by a camera or the like.

The printer 115 prints a predetermined image under the control of the control apparatus 4. For example, the printer 115 prints a slip, a seal, or the like. For example, the printer 115 prints an image on a medium by an ink-jet method, a thermal method, or the like.

The physical distribution system 100 may include a plurality of cameras. Further, one or several cameras among the plurality of cameras may be fixed cameras and the remaining cameras may be movable cameras. The fixed camera is a camera fixed to, for example, a ceiling, a wall surface, and a top surface and a side surface or the like that face the work station WS. The camera captures the entire warehouse and articles handled in the warehouse, and outputs captured data in real time. The captured data includes captured date and time data (including captured time) and captured image data. The captured image data is still image data and moving image data. In addition, the fixed camera may rotate vertically and horizontally based on a capturing control signal from a host management apparatus 1. By rotating the fixed camera vertically and horizontally, the inside of the warehouse can be monitored over a wide range.

The AGV 7 operates based on a control signal from the control apparatus 4. For example, the AGV 7 travels toward a designated loading position and lifts the AGV rack 8 at the designated loading position. The AGV 7 travels toward a designated unloading position and unloads the AGV rack 8 at the designated unloading position.

The AGV rack 8 is a rack for storing articles. For example, the AGV rack 8 stands upright on four posts. The height of an under-rack space below the AGV rack 8 (the height from the floor surface to the bottom of the rack) is higher than the height of the AGV 7. Accordingly, the AGV 7 can enter the under-rack space below the AGV rack 8. The AGV 7 which has entered the under-rack space lifts the AGV rack 8 with a pusher to such an extent that the distal ends of the posts are separated from the floor surface by several centimeters, and travels in a state in which the AGV rack 8 is being lifted. In this way, the AGV 7 transports the AGV rack 8.

Rack identification information that can be read by a fixed camera, a movable camera, or the like is attached to the AGV rack 8. Article identification information that can be read by a fixed camera, a mobile camera, or the like is also attached to the article. For example, the rack identification information and the article identification information are bar codes or two-dimensional codes. The physical distribution system may include a plurality of readers that read the rack identification information and the article identification information separately from the fixed camera or the mobile camera.

The work station WS accepts the AGV rack 8 transported by the AGV 7. In a case where article handling by the picking robot 111 is designated, the picking robot 111 grips and picks up the article stored in the AGV rack 8. In a case where article handling by the staff person 113 is designated, the allocated staff person 113 manually grips and picks up the article stored in the AGV rack 8. The input/output apparatus 112 provided corresponding to the work station WS displays, in addition to the article handling schedule, information for supporting pickup work of the staff person 113, for example, an image and article identification information of the article to be handled. The staff person 113 visually checks display contents of the input/output apparatus 112 and picks up the article.

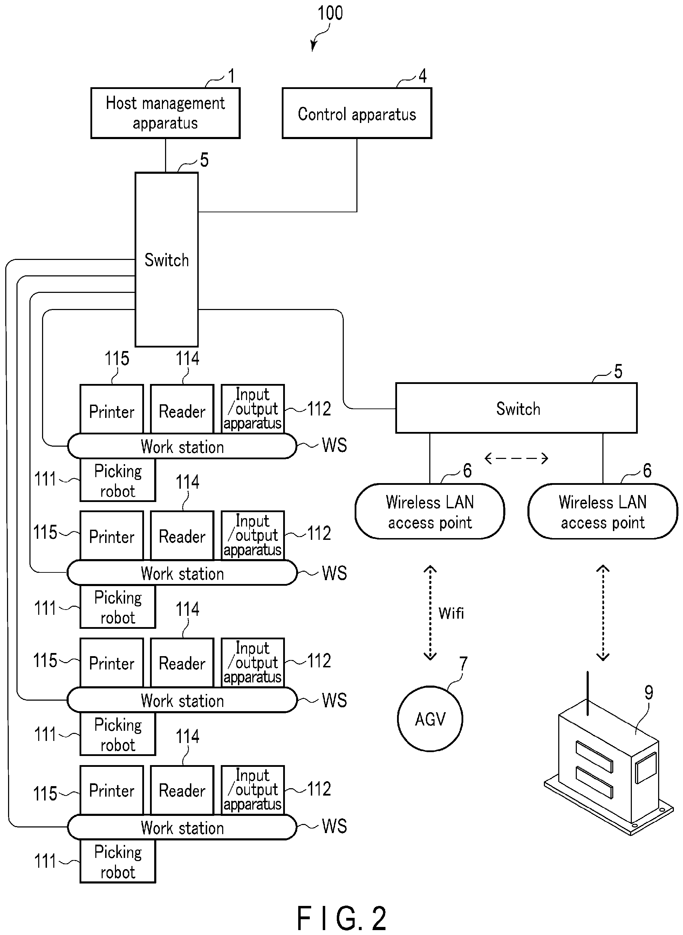

FIG. 2 is a block diagram illustrating an example of a control system of the physical distribution system 100 according to the embodiment. As illustrated in FIG. 2, the physical distribution system 100 includes the host management apparatus 1, the control apparatus 4, a switch 5, wireless local area network (LAN) access points 6, the AGV 7, a charging station 9, and the work stations WS.

The host management apparatus 1 is called a warehouse management system (WMS) and can be implemented by one or more computers. The host management apparatus 1 stores article management information on articles stored in the warehouse. The article management information indicates articles stored in each AGV rack 8.

The host management apparatus 1 acquires from an external device a shipping order indicating an article to be picked up. The host management apparatus 1 generates an order list composed of a plurality of shipping orders. The host management apparatus 1 transmits the generated order list to the control apparatus 4. The host management apparatus 1 will be described in detail later.

The control apparatus 4 (information processing apparatus) is called a warehouse execution system (WES), and can be implemented by one or more computers. The control apparatus 4 acquires and stores the order list. In addition, the control apparatus 4 stores map data indicating a position where each AGV rack 8 is arranged and an area (for example, a warehouse) where the AGV rack 8 is arranged.

The control apparatus 4 calls the AGV rack 8 to the work station WS based on the order list. Specifically, the control apparatus 4 controls each AGV 7 to deliver the AGV rack 8 to the work station WS.

The control apparatus 4 will be described in detail later.

The charging station 9 includes a power output unit. The AGV 7 includes a power input unit and a battery. The charging station 9 supplies the power output from the power output unit to the AGV 7. The AGV 7 supplies the power input through the power input unit to the battery. For example, the height of the power output unit from the floor surface is equal to the height of the power input unit of the AGV 7 from the floor surface. The AGV 7 travels to a position corresponding to the power output unit of the charging station 9 under the control of the control apparatus 4, connects the power input unit to the power output unit, and receives power supply. The connection between the power input unit and the power output unit may be either contact or non-contact.

The wireless LAN access points 6 perform data transmission and reception with communication devices of the AGV 7, the charging station 9, and the like. In a case where the physical distribution system 100 includes a fixed camera and a mobile camera, the wireless LAN access points 6 transmit and receive data to and from the fixed camera and the mobile camera.

Further, the switch 5 selects a destination of the received data and transmits the data to the selected destination.

The physical distribution system 100 may include other configurations as necessary in addition to the configurations illustrated in FIGS. 1 and 2, or a specific configuration may be excluded from the physical distribution system 100.

Next, the host management apparatus 1 will be described.

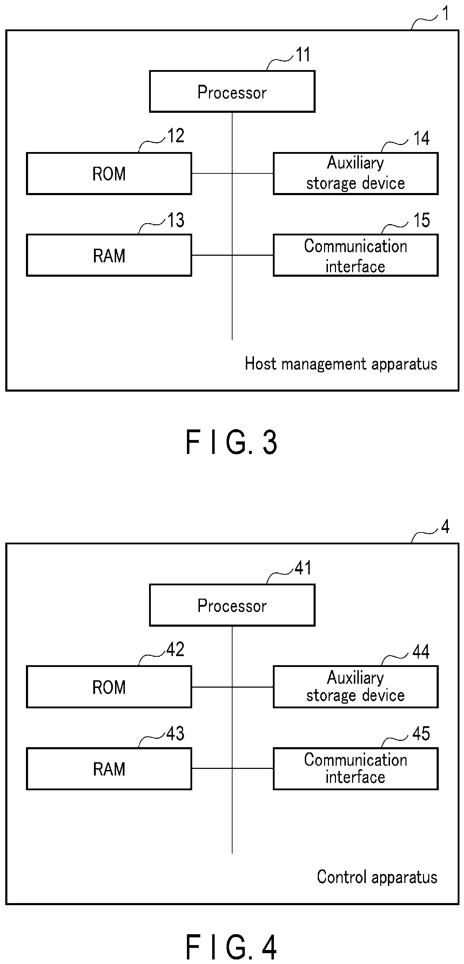

FIG. 3 is a block diagram illustrating an example of the host management apparatus 1 according to the embodiment.

The host management apparatus 1 includes one or more computers. For example, the host management apparatus 1 includes a processor 11, a ROM 12, a RAM 13, an auxiliary storage device 14, a communication interface 15, and the like.

The host management apparatus 1 may include other configurations as necessary in addition to the configuration illustrated in FIG. 3, or a specific configuration may be excluded from the host management apparatus 1.

The processor 11 has a function of controlling the entire operation of the host management apparatus 1. The processor 11 may include an internal cache, various interfaces, and the like. The processor 11 realizes various processing by executing a program stored in advance in an internal memory, the ROM 12, or the auxiliary storage device 14.

For example, the processor 11 is a central processing unit (CPU). The processor 11 may be implemented by hardware such as a large scale integration (LSI), an application specific integrated circuit (ASIC), or a field-programmable gate array (FPGA).

The ROM 12 is a non-transitory computer-readable storage medium and stores the aforementioned program. Also, the ROM 12 stores data for use by the processor 11 to perform various processing, as well as a variety of setting values, etc. The RAM 13 is a memory for data read and data write. The RAM 13 is utilized as a so-called work area for storing data to be temporarily used by the processor 11 to perform various processing.

The auxiliary storage device 14 is a non-transitory computer-readable storage medium and may store the program described above. In addition, the auxiliary storage device 14 stores data to be used by the processor 11 when performing various types of processing, data generated by the processing performed by the processor 11, or various setting values, and the like.

The auxiliary storage device 14 stores map data in advance. In addition, the auxiliary storage device 14 stores rack information indicating articles stored in each AGV rack 8 in advance. For example, the rack information stores a rack code indicating the AGV rack 8 and an article code indicating an article stored in the AGV rack 8 in association with each other.

The host management apparatus 1 may be transferred in a state in which the program is stored in the ROM 12 or the auxiliary storage device 14, or the host management apparatus 1 may be transferred in a state in which the program is not stored. In the latter case, the host management apparatus 1 reads the program stored in a removable storage medium such as an optical disk or a semiconductor memory, and writes the read program to the auxiliary storage device 14. Alternatively, the host management apparatus 1 downloads the program through a network or the like and writes the downloaded program to the auxiliary storage device 14.

The communication interface 15 is an interface for transmitting and receiving data to and from various devices. The communication interface 15 is connected to an external device, the control apparatus 4, and the like. In addition, the communication interface 15 acquires a shipping order or the like from an external device. For example, the communication interface 15 supports local area network (LAN) connection and the like.

Next, the control apparatus 4 will be described.

FIG. 4 is a block diagram illustrating an example of the control apparatus 4 according to the embodiment.

The control apparatus 4 includes one or a plurality of computers. For example, the control apparatus 4 includes a processor 41, a ROM 42, a RAM 43, an auxiliary storage device 44, and a communication interface 45.

The control apparatus 4 may include other configurations as necessary in addition to the configuration illustrated in FIG. 4, or a specific configuration may be excluded from the control apparatus 4.

The processor 41 has a function of controlling the entire operation of the control apparatus 4. The processor 41 may include an internal cache, various interfaces, and the like. The processor 41 realizes various processing by executing programs stored in advance in the internal memory, the ROM 42, or the auxiliary storage device 44.

For example, the processor 41 is a CPU. The processor 41 may be implemented by hardware such as an LSI, an ASIC, or an FPGA.

The ROM 42 is a non-transitory computer-readable storage medium and stores the aforementioned program. Also, the ROM 42 stores data for use by the processor 41 to perform various processing, as well as a variety of setting values, etc. The RAM 43 is a memory for data read and data write. The RAM 43 is utilized as a so-called work area for storing data to be temporarily used by the processor 41 to perform various processing.

The auxiliary storage device 44 is a non-transitory computer-readable storage medium and may store the program described above. In addition, the auxiliary storage device 44 stores data to be used by the processor 41 when performing various types of processing, data generated by the processing performed by the processor 41, or various setting values, and the like.

The communication interface 45 is an interface for transmitting and receiving data to and from various devices. The communication interface 45 is connected to the host management apparatus 1. The communication interface 45 is connected to the AGV 7 through the wireless LAN access point 6. The communication interface 45 is connected to each work station WS. That is, the communication interface 45 is connected to the picking robot 111, the input/output apparatus 112, the reader 114, and the printer 115 of each work station WS.

For example, the communication interface 45 supports LAN connection and the like. The communication interface 45 may include an interface for data transmission and reception with the host management apparatus 1, an interface for data transmission and reception with the AGV 7, and an interface for connection with the work station WS.

Next, the AGV 7 will be described.

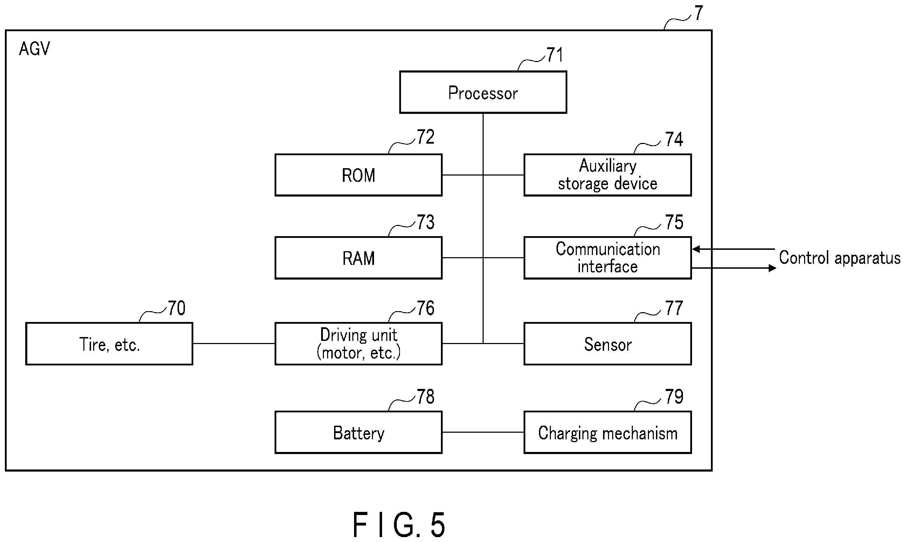

FIG. 5 is a block diagram illustrating an example of the AGV 7 according to the embodiment.

The AGV 7 includes a processor 71, a ROM 72, a RAM 73, an auxiliary storage device 74, a communication interface 75, a driving unit 76, a sensor 77, a battery 78, a charging mechanism 79, a tire 70, and the like.

The AGV 7 may include other configurations as necessary in addition to the configuration illustrated in FIG. 5, or a specific configuration may be excluded from the AGV 7.

The processor 71 has a function of controlling the entire operation of the AGV 7. The processor 71 may include an internal cache, various interfaces, and the like. The processor 71 realizes various processing by executing programs stored in advance in the internal memory, the ROM 72, or the auxiliary storage device 74.

For example, the processor 71 is a CPU. The processor 71 may be implemented by hardware such as an LSI, an ASIC, or an FPGA.

The processor 71 performs processing such as calculation and control necessary for operations such as acceleration, deceleration, stopping, changing direction, and loading and unloading of the AGV rack 8. The processor 71 executes a program stored in the ROM 72 or the like based on a control signal from the control apparatus 4, thereby generating a drive signal and outputting the drive signal to each unit.

For example, the control apparatus 4 transmits a control signal for moving the AGV 7 from the current position to a first position (the position of a target AGV rack 8) and from the first position to a second position (the position of a target work station WS). The control apparatus 4 also transmits a control signal for moving the AGV 7 from the second position to the first position. The processor 71 of the AGV 7 outputs a drive signal corresponding to a control signal transmitted from the control apparatus 4. As a result, the AGV 7 moves from the current position to the first position, from the first position to the second position, and from the second position to the first position. In addition, the processor 71 outputs a drive signal according to an instruction for loading/unloading the AGV rack 8 included in the control signal transmitted from the control apparatus 4. As a result, the AGV 7 lifts the AGV rack 8 by the pusher and lowers the lifted AGV rack 8.

The ROM 72 is a non-transitory computer-readable storage medium and stores the aforementioned program. Also, the ROM 72 stores data for use by the processor 71 to perform various processing, as well as a variety of setting values, etc. The RAM 73 is a memory for data read and data write. The RAM 73 is utilized as a so-called work area for storing data to be temporarily used by the processor 71 to perform various processing.

The auxiliary storage device 74 is a non-transitory computer-readable storage medium and may store the program described above. In addition, the auxiliary storage device 74 stores data to be used by the processor 71 when performing various types of processing, data generated by the processing performed by the processor 71, or various setting values, and the like.

The communication interface 75 is an interface that transmits and receives data to and from the control apparatus 4 through the wireless LAN access point 6. For example, the communication interface 75 supports wireless LAN connection.

The driving unit 76 is a motor or the like, and the motor is rotated or stopped based on a drive signal output from the processor 71. The power of the motor is transmitted to the tire 70, and the power of the motor is transmitted to a steering mechanism. The AGV 7 is moved to a target position by the power from the motor.

In a state in which the AGV 7 enters the under-rack space below the AGV rack 8, the driving unit 76 rotates the motor (forward rotation) based on the drive signal output from the processor 71. The pusher is raised by power from the motor, and the AGV rack 8 is lifted. After the AGV 7 reaches the target position, the driving unit 76 rotates the motor (inverse rotation) based on the drive signal output from the processor 71. The pusher is lowered by the power from the motor, and the AGV rack 8 is lowered to the floor surface.

The sensor 77 is a plurality of reflection sensors. Each reflection sensor is mounted on a periphery of the AGV 7. Each reflection sensor emits a laser beam, detects a time from emission of the laser beam to return of the laser beam reflected by an object, senses a distance to the object based on the detected time, and notifies the processor 71 of a sensing signal. The processor 71 outputs a control signal for controlling the travel of the AGV 7 based on the sensing signal from the sensor 77. For example, based on the sensing signal from the sensor 77, the processor 71 outputs a control signal for deceleration, stopping, or the like to avoid collision with the object. A camera may be provided in addition to the sensor 77, and the camera may capture an image of the surroundings and output the captured image to the processor 71. In this case, the processor 71 analyzes the captured image and outputs a control signal for deceleration, stopping, or the like to avoid collision with the object.

The battery 78 supplies necessary electric power to the driving unit 76 and the like. The charging mechanism 79 is a mechanism that connects the charging station 9 and the battery 78, and the battery 78 is charged with electric power supplied from the charging station 9 through the charging mechanism 79.

Next, functions realized by the host management apparatus 1 will be described. The functions realized by the processor 11 are implemented by the processor 11 executing the program stored in the internal memory, the ROM 12, the auxiliary storage device 14, or the like.

The processor 11 has a function of transmitting an order list including shipping orders indicating articles to be picked up to the control apparatus 4.

The processor 11 acquires a shipping order from an external device or the like through the communication interface 15. The processor 11 may accept an input of a shipping order through an operation unit or the like. Here, the shipping order may indicate one article, or may indicate a plurality of articles.

The shipping order indicates an ID for identifying an article to be picked up, a delivery destination of the article, and the like. The shipping order indicates the presence or absence of a job and the contents thereof. That is, the shipping order includes information (attribute information) indicating that the shipping order itself is a job order or a normal order.

The processor 11 generates an order list by listing a plurality of shipping orders. Upon generating the order list, the processor 11 transmits the order list to the control apparatus 4 through the communication interface 15.

For example, the processor 11 may transmit the order list to the control apparatus 4 at a predetermined timing. Alternatively, the processor 11 may transmit the order list to the control apparatus 4 in response to a request from the control apparatus 4.

Next, functions realized by the control apparatus 4 will be described. The functions realized by the processor 41 are implemented by the processor 41 executing the program stored in the internal memory, the ROM 42, the auxiliary storage device 44, or the like.

First, the processor 41 has a function of acquiring an order list.

The processor 41 receives the order list from the host management apparatus 1 through the communication interface 45 at a predetermined timing. The processor 41 may transmit a request for requesting an order list to the host management apparatus 1 through the communication interface 45 and receive the order list from the host management apparatus 1.

The processor 41 also has a function of setting a representative label for a plurality of job orders.

Here, it is assumed that a picking label for identifying the shipping order is set for each shipping order. For example, the picking label is composed of a numerical value, a character string, or the like.

The processor 41 extracts a plurality of job orders from the order list according to a predetermined algorithm. Upon extracting the job orders, the processor 41 sets the representative label as the picking label of the extracted job orders. The representative label identifies a plurality of picking labels as a set.

The processor 41 stores a label correspondence table in which the representative label and the picking labels are associated with each other in the auxiliary storage device 44 or the like.

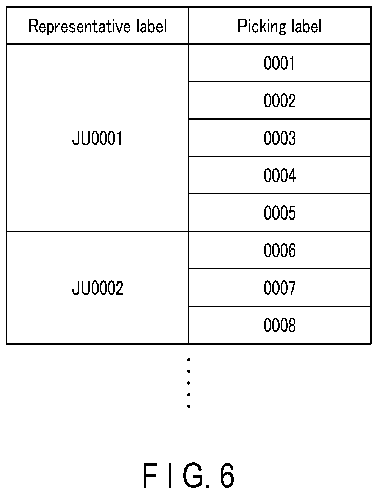

FIG. 6 illustrates a configuration example of the label correspondence table. As illustrated in FIG. 6, the label correspondence table stores the representative label and the picking labels in association with each other. For example, the label correspondence table associates "0001" to "0005" as the picking labels with "JU0001" as the representative label.

The label correspondence table may be generated by the processor 11 of the host management apparatus 1. In this case, the processor 41 acquires the label correspondence table from the host management apparatus 1.

The processor 41 also has a function of setting an operation mode of the work station WS.

Here, the operation mode is either a job mode or a normal mode. The job mode is an operation mode in which the work station WS picks up an article of a job order. The normal mode is an operation mode in which the work station WS picks up an article of a normal order.

The processor 41 acquires login information through the input/output apparatus 112. For example, the login information includes an ID for identifying the staff person 113.

Upon acquiring the login information, the processor 41 displays a selection screen for accepting a selection of an operation mode on the input/output apparatus 112.

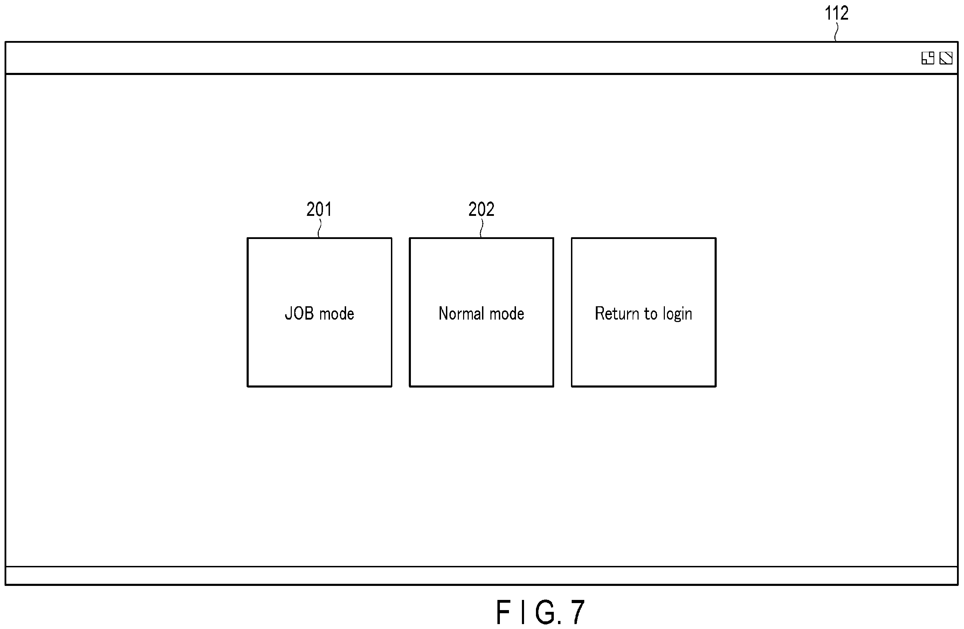

FIG. 7 shows an example of the selection screen displayed by the processor 41. As shown in FIG. 7, the selection screen displays icons 201 and 202.

The icon 201 is an icon for accepting a selection of the job mode.

The icon 202 is an icon for accepting a selection of the normal mode.

The processor 41 accepts a tap on the icon 201 or 202 through the input/output apparatus 112 and accepts a selection of an operation mode.

The processor 41 also has a function of accepting an input of a job order if the job mode is set.

Upon setting of the job mode (upon accepting the tap on the icon 201), the processor 41 displays an input screen of a job order on the input/output apparatus 112.

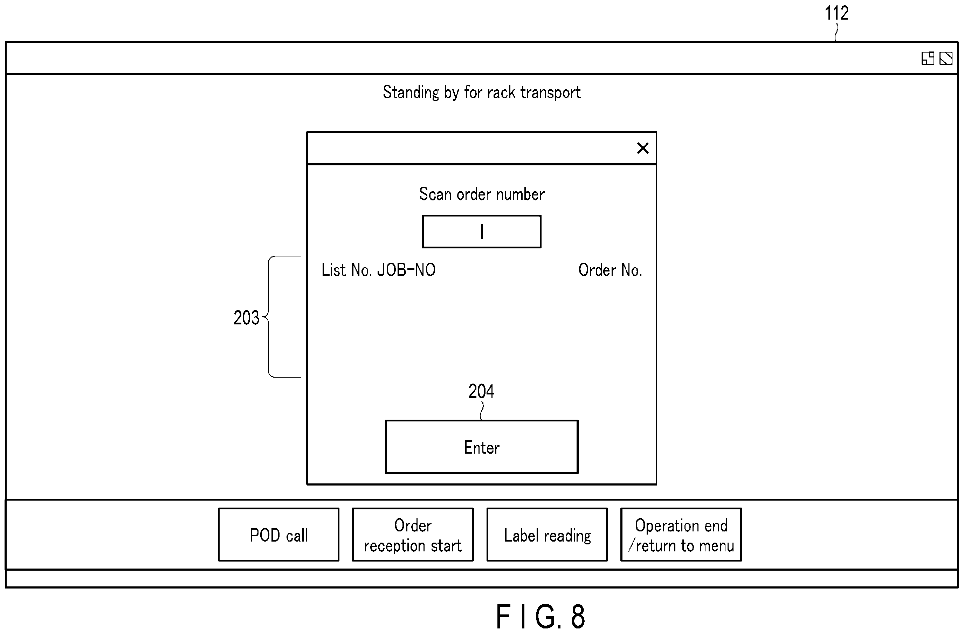

FIG. 8 is an example of the input screen displayed by the processor 41. As shown in FIG. 7, the selection screen displays a display area 203 and an icon 204.

The display area 203 displays the input representative label (JOB-NO in FIG. 8) and a picking label (an order number in FIG. 8).

The icon 204 is an icon for accepting an operation of starting pickup.

Here, the processor 41 scans the code obtained by encoding the representative label or the picking label through the reader 114.

The staff person 113 causes the reader 114 to read a code obtained by encoding the representative label or the picking label.

The processor 41 acquires the representative label or the picking label from the code through the reader 114.

Upon acquiring the picking label, the processor 41 adds the picking label to a batch (for example, a first batch) in which the job orders allocated to the work station WS are listed. Further, the processor 41 displays the picking label in the display area 203.

Upon acquiring the representative label, the processor 41 acquires a plurality of picking labels corresponding to the acquired representative label with reference to the label correspondence table. Upon acquiring a plurality of pickings, the processor 41 adds the picking labels to the batch. The processor 41 displays the representative label and the picking labels in the display area 203.

The processor 41 scans the code through the reader 114 until an input of an operation to complete the scanning is accepted through the input/output apparatus 112 or the like.

The processor 41 has a function of transporting the AGV rack 8 to the work station WS on a batch basis.

Upon completing the scanning, the processor 41 accepts a tap on the icon 204. Upon accepting the tap on the icon 204, the processor 41 optimizes the sequence of the picking labels in the batch. For example, the processor 41 rearranges the sequence of the picking labels in the batch so that the number of calls to the AGV rack 8 is minimized. Further, the processor 41 rearranges the sequence of the picking labels in the batch so as not to simultaneously call the same AGV rack 8 to another work station WS.

The method by which the processor 41 optimizes the sequence of the picking labels is not limited to a specific method.

Upon optimizing the batch, the processor 41 acquires an unprocessed first picking label from the batch. Upon acquiring the first picking label, the processor 41 specifies the AGV rack 8 that stores the article of the job order indicated by the picking label.

Upon specifying the AGV rack 8, the processor 41 transmits a control signal through the communication interface 45 to one AGV 7 to move to the specified AGV rack 8.

Upon movement of the AGV 7 to an under-rack space below the AGV rack 8 in accordance with the control signal, the processor 41 transmits a control signal to the AGV 7 through the communication interface 45 so as to lift the AGV rack 8.

Upon lifting of the AGV rack 8 by the AGV 7 in accordance with the control signal, the processor 41 transmits a control signal to the AGV 7 through the communication interface 45 so as to move to the work station WS.

The AGV 7 moves to the work station WS in accordance with the control signal.

At the work station WS, the picking robot 111 or the staff person 113 picks up an article from the AGV rack 8 transported by the AGV 7.

The processor 41 may print a slip, a seal, or the like relating to the job order by using the printer 115 of the work station WS.

The processor 41 calls the AGV rack 8 to the work station WS in a similar manner for each picking label of the batch.

Further, the processor 41 has a function of transporting the AGV rack 8 to the work station WS based on the normal order in a case where the normal mode is set.

Upon setting the normal mode (upon accepting the tap on the icon 202), the processor 41 acquires a normal order from the order list. For example, the processor 41 acquires a predetermined number of normal orders from the unprocessed normal orders. Further, the processor 41 may reallocate the normal order allocated to another work station WS. That is, the processor 41 may acquire some normal orders from the normal orders allocated to other work stations WS.

Upon acquiring the normal order, the processor 41 generates a batch that lists picking labels identifying the acquired normal order. Upon generating the batch, the processor 41 optimizes the sequence of the picking labels in the batch. For example, the processor 41 rearranges the sequence of the picking labels in the batch so that the number of calls to the AGV rack 8 is minimized. Further, the processor 41 rearranges the sequence of the picking labels in the batch so as not to simultaneously call the same AGV rack 8 to another work station WS.

The batch may include the picking labels of the normal order and the picking labels of the job order. For example, the processor 41 generates a batch by listing the picking labels of the normal order and the pickings of the job order. The processor 41 may rearrange the sequence of the picking labels in the batch in a state where the normal order and the job order are mixed.

In addition, the processor 41 may rearrange the sequence of the picking labels in the batch in a case where the processor 41 receives a notification of completion of the processing of the job order from another work station WS. For example, the processor 41 sets a shipping order to be allocated to the other work station and excludes the picking label of the set shipping order from the batch. The processor 41 rearranges the sequence of the picking labels in the batch from which the picking label has been excluded.

In a case where the processor 41 receives label information from another work station WS and extracts the job order based on the label information, the processor 41 may rearrange the sequence of the picking labels in the batch. For example, the processor 41 excludes the picking label of the job order to be allocated to the other work station from the batch. The processor 41 rearranges the sequence of the picking labels in the batch from which the picking label has been excluded.

The method and timing by which the processor 41 optimizes the sequence of the picking labels is not limited to a specific method.

Upon optimizing the batch, the processor 41 acquires an unprocessed first picking label from the batch. Upon acquiring the first picking label, the processor 41 specifies the AGV rack 8 that stores the article of the normal order indicated by the picking label.

Upon specifying the AGV rack 8, the processor 41 transmits a control signal through the communication interface 45 to one AGV 7 to move to the specified AGV rack 8.

Upon movement of the AGV 7 to an under-rack space below the AGV rack 8 in accordance with the control signal, the processor 41 transmits a control signal to the AGV 7 through the communication interface 45 so as to lift the AGV rack 8.

Upon lifting of the AGV rack 8 by the AGV 7 in accordance with the control signal, the processor 41 transmits a control signal to the AGV 7 through the communication interface 45 so as to move to the work station WS.

The AGV 7 moves to the work station WS in accordance with the control signal.

At the work station WS, the picking robot 111 or the staff person 113 picks up an article from the AGV rack 8 transported by the AGV 7.

The processor 41 calls the AGV rack 8 to the work station WS in a similar manner for each normal order of the batch.

Next, an operation example of the physical distribution system 100 will be described.

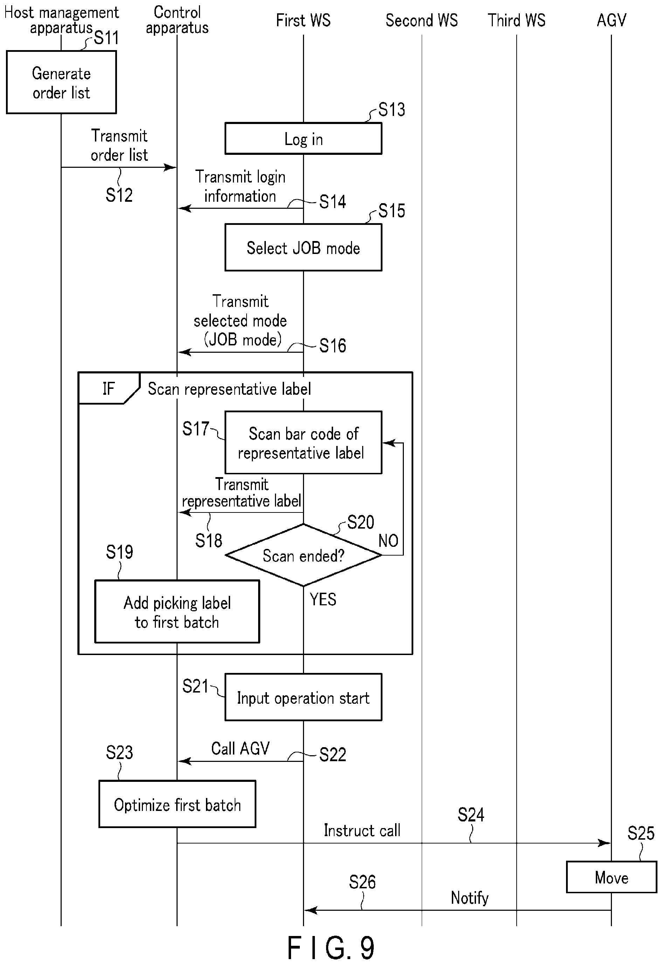

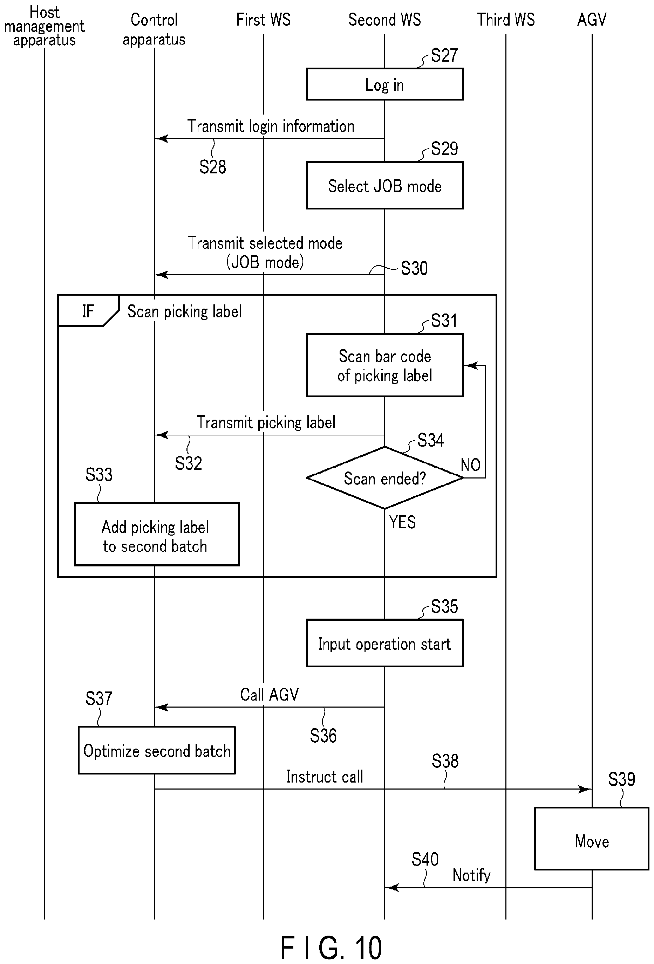

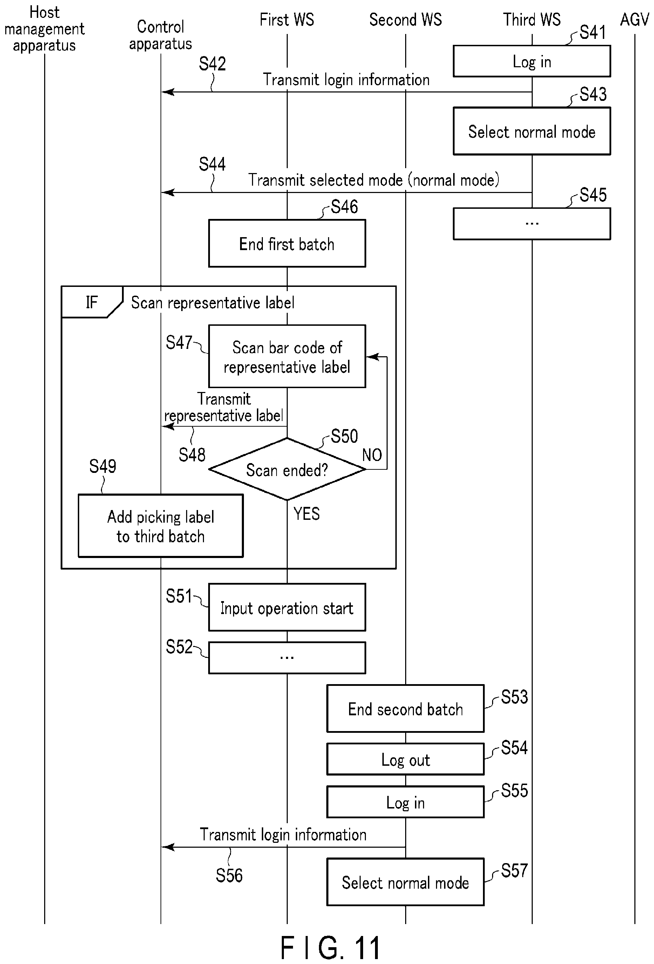

FIGS. 9 to 11 are sequence diagrams for explaining an operation example of the physical distribution system 100.

First, the processor 11 of the host management apparatus 1 generates an order list including job orders and normal orders (S11). Upon generating the order list, the processor 11 transmits the order list to the control apparatus 4 through the communication interface 15 (S12).

The processor 41 of the control apparatus 4 receives the order list from the host management apparatus 1 through the communication interface 45.

Here, the first WS acquires login information through the input/output apparatus 112 (S13). Upon acquiring the login information, the first WS transmits the login information to the control apparatus 4 through the input/output apparatus 112 (S14).

The processor 41 of the control apparatus 4 receives the login information from the first WS through the communication interface 45.

Upon transmitting the login information to the control apparatus 4, the first WS accepts a selection of the job mode through the input/output apparatus 112 (S15). Upon accepting the selection of the job mode, the first WS transmits information indicating that the job mode has been selected (notification to start processing of the job order) to the control apparatus 4 through the input/output apparatus 112 (S16).

The processor 41 of the control apparatus 4 receives the information from the first WS through the communication interface 45.

Here, the first WS scans the code of the representative label using the reader 114 (S17). Upon scanning the code of the representative label, the first WS transmits the representative label obtained by decoding the code using the reader 114 to the control apparatus 4 (S18).

The processor 41 of the control apparatus 4 receives the representative label from the first WS through the communication interface 45. Upon receiving the representative label from the first WS, the processor 41 adds the picking label corresponding to the representative label to the first batch (S19). Here, the first batch is composed of picking labels of job orders allocated to the first WS.

If the scan is not ended (S20, NO), the first WS returns to S17.

If the scanning is ended (S20, YES), the first WS accepts an input of an operation for starting pickup through the input/output apparatus 112 (S21). Upon accepting the input of the operation, the first WS transmits, to the control apparatus 4 through the input/output apparatus 112, information indicating that the input of the operation has been accepted (S22).

The processor 41 of the control apparatus 4 receives the information from the first WS through the communication interface 45. Upon receiving the information, the processor 41 optimizes the first batch (S23).

Upon optimizing the first batch, the processor 41 transmits to the AGV 7 a control signal for transporting the AGV rack 8 to the first WS based on the job order indicated by the picking label constituting the first batch (S24) .

The AGV 7 receives the control signal. Upon receiving the control signal, the AGV 7 transports the AGV rack 8 to the first WS (S25). Upon transporting the AGV rack 8 to the first WS, the AGV 7 transmits a notification indicating that the AGV rack 8 has been transported to the first WS (S26) .

The first WS picks up an article from the AGV rack 8 using the picking robot 111 or the staff person 113.

The physical distribution system 100 repeats S24 to S26 for each picking label of the first batch.

The second WS acquires login information through the input/output apparatus 112 (S27). Upon acquiring the login information, the second WS transmits the login information to the control apparatus 4 through the input/output apparatus 112 (S28).

The processor 41 of the control apparatus 4 receives the login information from the second WS through the communication interface 45.

Upon transmitting the login information to the control apparatus 4, the second WS accepts a selection of the job mode through the input/output apparatus 112 (S29). Upon accepting the selection of the job mode, the second WS transmits, to the control apparatus 4 through the input/output apparatus 112, information indicating that the job mode has been selected (S30).

The processor 41 of the control apparatus 4 receives the information from the second WS through the communication interface 45.

Here, the second WS scans the code of the picking label using the reader 114 (S31). Upon scanning the code of the picking label, the second WS transmits the picking label obtained by decoding the code using the reader 114 to the control apparatus 4 (S32).

The processor 41 of the control apparatus 4 receives the picking label from the second WS through the communication interface 45. Upon receiving the picking label from the second WS, the processor 41 adds the picking label to the second batch (S33). Here, the second batch is composed of picking labels of job orders allocated to the second WS.

If the scan is not ended (S34, NO), the second WS returns to S31.

If the scanning is ended (S34, YES), the second WS accepts an input of an operation for starting pickup through the input/output apparatus 112 (S35). Upon accepting the input of the operation, the second WS transmits, to the control apparatus 4 through the input/output apparatus 112, information indicating that the input of the operation has been accepted (S36).

The processor 41 of the control apparatus 4 receives the information from the second WS through the communication interface 45. Upon receiving the information, the processor 41 optimizes the second batch (S37).

Upon optimizing the second batch, the processor 41 transmits to the AGV 7 a control signal for transporting the AGV rack 8 to the second WS based on the job order indicated by the picking label constituting the second batch (S38).

The AGV 7 receives the control signal. Upon receiving the control signal, the AGV 7 transports the AGV rack 8 to the second WS (S39). Upon transporting the AGV rack 8 to the second WS, the AGV 7 transmits a notification indicating that the AGV rack 8 has been transported to the second WS (S40).

The second WS picks up an article from the AGV rack 8 using the picking robot 111 or the staff person 113.

The physical distribution system 100 repeats S38 to S40 for each picking label of the second batch.

Here, the third WS acquires login information through the input/output apparatus 112 (S41). Upon acquiring the login information, the third WS transmits the login information to the control apparatus 4 through the input/output apparatus 112 (S42).

The processor 41 of the control apparatus 4 receives the login information from the third WS through the communication interface 45.

Upon transmitting the login information to the control apparatus 4, the third WS accepts a selection of the normal mode through the input/output apparatus 112 (S43). Upon accepting the selection of the normal mode, the third WS transmits, to the control apparatus 4 through the input/output apparatus 112, information indicating that the normal mode is selected (S44).

The processor 41 of the control apparatus 4 receives the information through the communication interface 45. Upon receiving the information, the processor 41 causes the AGV 7 to transport the AGV rack 8 to the third WS based on the normal order.

The third WS picks up an article from the AGV rack 8 (S45) .

Here, it is assumed that pickup of job orders constituting the first batch has been completed (S46).

Upon completing the pickup of the job orders constituting the first batch, the first WS scans the code of the representative label by using the reader 114 (S47). Upon scanning the code of the representative label, the first WS transmits the representative label obtained by decoding the code using the reader 114 to the control apparatus 4 (S48).

The processor 41 of the control apparatus 4 receives the representative label from the first WS through the communication interface 45. Upon receiving the representative label from the first WS, the processor 41 adds the picking label corresponding to the representative label to the third batch (S19). Here, the third batch is composed of picking labels of job orders allocated to the first WS.

If the scan is not ended (S50, NO), the first WS returns to S47.

If the scanning is ended (S 5 0, YES), the first WS accepts an input of an operation for starting pickup through the input/output apparatus 112 (S 5 1). Upon accepting the input of the operation, the first WS picks up the article as described above (S52).

Here, it is assumed that pickup of job orders constituting the second batch has been completed (S53).

It is assumed that the second WS has accepted an input of a logout operation through the input/output apparatus 112 (S54).

Here, the second WS transmits login information to the control apparatus 4 through the input/output apparatus 112 (S55) .

The processor 41 of the control apparatus 4 receives the login information from the second WS through the communication interface 45.

Upon transmitting the login information to the control apparatus 4, the second WS accepts a selection of the normal mode through the input/output apparatus 112 (S57).

The physical distribution system 100 operates in the same manner hereinafter.

Next, an operation example of the control apparatus 4 will be described.

First, an operation example in a case where the control apparatus 4 sets the job mode in the work station WS will be described.

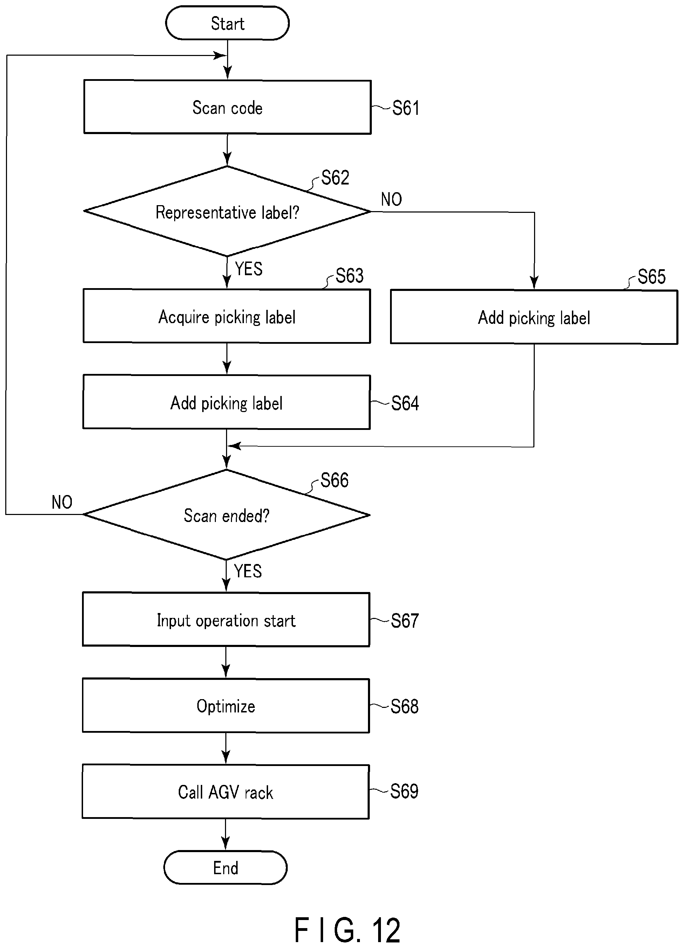

FIG. 12 is a flowchart for explaining the operation example in the case where the control apparatus 4 sets the job mode in the work station WS.

First, the processor 41 of the control apparatus 4 scans the code through the reader 114 (S61). Upon scanning the code, the processor 41 determines whether the label obtained by decoding the code is a representative label (S62). For example, the processor 41 determines whether the label obtained by decoding the code includes "JU".

If it is determined that the label obtained by decoding the code is a representative label (S62, YES), the processor 41 refers to the label correspondence table and acquires the picking label corresponding to the representative label (S63).

Upon acquiring the picking label, the processor 41 adds the picking label corresponding to the representative label to the batch (S64).

If it is determined that the label obtained by decoding the code is a picking label (S62, NO), the processor 41 adds the picking label to the batch (S65).

In the case where the picking label corresponding to the representative label is added to the batch (S64) or the picking label is added to the batch (S65), the processor 41 determines whether the scanning has been completed (S66).

If it is determined that the scanning has not been completed (S66, NO), the processor 41 returns to S61.

If it is determined that the scanning has been completed (S66, YES), the processor 41 accepts an input of an operation for starting pickup through the input/output apparatus 112 (S67). Upon accepting the input of the operation for starting pickup, the processor 41 optimizes the batch (S68). Upon optimizing the batch, the processor 41 causes the AGV 7 to transport the AGV rack 8 to the work station WS based on the job order indicated by each picking label of the optimized batch (S69).

Upon transporting the AGV rack 8 to the work station WS based on the job order indicated by each picking label of the optimized batch, the processor 41 ends the operation.

The processor 41 may print a slip, a seal, and the like relating to the job using the printer 115.

Next, an operation example in a case where the control apparatus 4 sets the normal mode in the work station WS will be described.

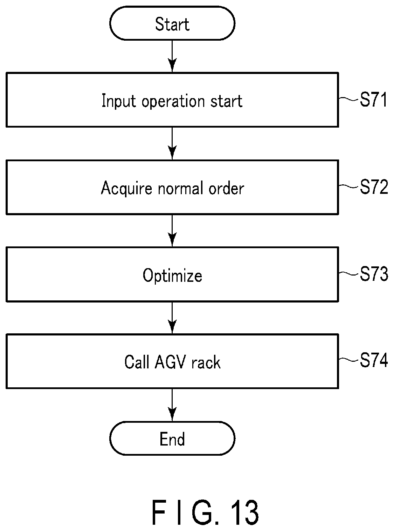

FIG. 13 is a flowchart for explaining an operation example in a case where the control apparatus 4 sets the normal mode in the work station WS.

First, the processor 41 of the control apparatus 4 accepts an input of an operation for starting pickup through the input/output apparatus 112 (S71). Upon accepting the input of the operation for starting pickup, the processor 41 acquires a normal order (S72).

Upon acquiring the normal order, the processor 41 optimizes the batch composed of the picking labels of the normal order (S73). Upon optimizing the batch, the processor 41 causes the AGV 7 to transport the AGV rack 8 to the work station WS based on the normal order indicated by each picking label of the optimized batch (S74).

Upon transporting the AGV rack 8 to the work station WS based on the normal order indicated by each picking label of the optimized batch, the processor 41 ends the operation.

The picking label scanned by the processor 41 through the reader 114 may not indicate a job order. For example, the picking label scanned by the processor 41 through the reader 114 may indicate a shipping order of a predetermined article (for example, an article that can be picked up by the picking robot 111).

Further, the processor 41 may not optimize the batch.

The processor 41 may acquire a picking label from a memory or the like. The processor 41 may accept an input of a picking label through the input/output apparatus 112 or the like.

Further, in a case where the job mode is set to the work station WS, the processor 41 may not receive the label information from the work station WS. In a case where a job mode is set to the work station WS, the processor 41 acquires job orders and rearranges a predetermined sequence. The processor 41 may transmit a control signal to the AGV 7 for transporting the rack to the work station WS based on the job order according to the predetermined order.

The physical distribution system configured as described above determines an order to be allocated to a work station based on an operation input at the work station. The physical distribution system also optimizes the sequence of the allocated orders. As a result, the physical distribution system can allocate a job order to a predetermined work station. Therefore, the physical distribution system can collect the articles requiring the job in the predetermined work station.

While several embodiments have been described, these embodiments have been presented by way of example and are not intended to limit the scope of the invention. The novel embodiments described herein can be implemented in a variety of other forms; furthermore, various omissions, substitutions, and changes can be made without departing from the spirit of the invention. The embodiments and their modifications are covered by the accompanying claims and their equivalents, as would fall within the scope and gist of the inventions.

## Claims

1. An information processing apparatus comprising:
a communication interface configured to transmit and receive data to and from a host management apparatus configured to manage orders for picking up articles, a plurality of work stations configured to pick up articles, and an automated guided vehicle configured to transport racks that store articles; and
a processor configured to:
acquire a plurality of orders from the host management apparatus through the communication interface;
extract, through the communication interface, a specific order from the plurality of orders based on label information indicating the specific order acquired from a first work station; and
transmit, through the communication interface to the automated guided vehicle, a control signal for transporting one of the racks that stores an article indicated by the extracted specific order to the first work station and a control signal for transporting another one of the racks that stores an article indicated by a normal order other than the specific order to one of the work stations other than the first work station.

2. The information processing apparatus according to claim 1, wherein the processor is configured to:
rearrange the specific order in a predetermined sequence; and
transmit, through the communication interface, a control signal for transporting the racks that store articles indicated by the extracted specific orders to the first work station in the predetermined sequence.

3. The information processing apparatus according to claim 1 or 2, wherein the processor is configured to:
rearrange the normal order in a predetermined sequence; and
transmit, through the communication interface, a control signal for transporting the rack that stores the article indicated by the normal order to one of the work stations other than the first work station in the predetermined sequence.

4. The information processing apparatus according to claim 3, wherein the processor is configured to,
in a case of receiving, through the communication interface, a notification of completion of processing of the specific order, or a case of newly acquiring label information and extracting the specific order from the plurality of orders based on the label information:
rearrange the normal order in the predetermined sequence again; and
transmit, through the communication interface, a control signal for transporting the rack that stores the article indicated by the normal order to the work station in the predetermined order.

5. The information processing apparatus according to any one of claims 1 to 4, wherein:
the communication interface is connected to a reader included in the work station; and
the processor acquires the label information obtained by decoding a code read by the reader.

6. The information processing apparatus according to any one of claims 1 to 5, wherein the label information indicates an order to which a job is allocated as the specific order.

7. The information processing apparatus according to claim 6, wherein the job is attachment of a slip or a seal.

8. The information processing apparatus according to claim 7, wherein:
the communication interface is connected to a printer included in the work station; and
the processor prints the slip or the seal using the printer.

9. An information processing method executed by a processor, the method comprising:
acquiring a plurality of orders from a host management apparatus configured to manage orders for picking up articles;
extracting a specific order from the plurality of orders based on label information indicating the specific order acquired from a first work station among a plurality of work stations configured to pick up articles; and
transmitting, to an automated guided vehicle, a control signal for transporting a rack that stores an article indicated by the extracted specific order to the first work station and a control signal for transporting another rack that stores an article indicated by a normal order other than the specific order to one of the work stations other than the first work station.

10. A program executed by a processor, the program causing the processor to realize:
a function of acquiring a plurality of orders from a host management apparatus configured to manage orders for picking up articles;
a function of extracting a specific order from the plurality of orders based on label information indicating the specific order acquired from a first work station among a plurality of work stations configured to pick up articles; and
a function of transmitting, to an automated guided vehicle, a control signal for transporting a rack that stores an article indicated by the extracted specific order to the first work station and a control signal for transporting another rack that stores an article indicated by a normal order other than the specific order to one of the work stations other than the first work station.

11. A system comprising:
a host management apparatus configured to manage orders for picking up articles;
a plurality of work stations configured to pick up articles;
an automated guided vehicle configured to transport racks that store articles; and
an information processing apparatus including:
a communication interface configured to transmit and receive data to and from the host management apparatus, the plurality of work stations, and the automated guided vehicle; and
a processor configured to:
acquire a plurality of orders from the host management apparatus through the communication interface;
extract, through the communication interface, a specific order from the plurality of orders based on label information indicating the specific order acquired from a first work station; and
transmit, through the communication interface to the automated guided vehicle, a control signal for transporting one of the racks that stores an article indicated by the extracted specific order to the first work station and a control signal for transporting another one of the racks that stores an article indicated by a normal order other than the specific order to one of the work stations other than the first work station.

12. An information processing apparatus comprising:
a communication interface configured to transmit and receive data to and from a host management apparatus configured to manage orders for picking up articles, a plurality of work stations configured to pick up articles, and an automated guided vehicle configured to transport racks that store articles; and
a processor configured to:
acquire, through the communication interface from the host management apparatus, a plurality of orders and attribute information indicating whether or not each of the plurality of orders is a specific order requiring specific processing; and
extract, through the communication interface, a specific order indicated by the attribute information based on a notification to start processing of the specific order received from a first work station, and transmit, to the automated guided vehicle, a control signal for transporting one of the racks that stores an article indicated by the specific order to the first work station and a control signal for transporting another one of the racks that stores an article indicated by a normal order other than the specific order to one of the work stations other than the first work station.
